Europäisches Patentamt

European Patent Office

Office européen des brevets

(11) Veröffentlichungsnummer: **0 362 467**
**A1**

(12) **EUROPÄISCHE PATENTANMELDUNG**

(21) Anmeldenummer: 89107657.2

(22) Anmeldetag: 27.04.89

(51) Int. Cl.⁵: **B65D 19/38 , B65G 1/08**

(30) Priorität: 04.10.88 DE 3833662

(43) Veröffentlichungstag der Anmeldung:
**11.04.90 Patentblatt 90/15**

(84) Benannte Vertragsstaaten:
**AT BE CH DE ES FR GB GR IT LI LU NL SE**

(71) Anmelder: **S-WAY AG**
**Bahnhofplatz 11**
**CH-9100 Herisau(CH)**

(72) Erfinder: **Schmidt, Hermann**
**Bruckner Strasse 37**
**D-4670 Lünen(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) **Palette zur Aufnahme von Gütern in Regallagern.**

(57) Mit einer Palette zur Aufnahme von Gütern und
zum Einsatz in Rollregallagern oder dgl. soll eine
Lösung geschaffen werden, mit der auf den Einsatz
von Rollpaletten bzw. Rollrahmen zur Aufnahme von
Paletten verzichtet werden kann.

Dies wird dadurch erreicht, daß die Unterseite
der Palette (1) mit wenigstens einem Schienenpaar
(3,3a) zur Verschiebung auf korrespondierenden,
ortsfesten Rollenbahnen (4,4a) im Lager bzw. Regal
ausgerüstet ist.

Fig. 1

EP 0 362 467 A1

## Palette zur Aufnahme von Gütern in Regallagern

Die Erfindung richtet sich auf eine Palette zur Aufnahme von Gütern und zum Einsatz in Rollregallagern oder dgl.

Rollregallager sind in unterschiedlichen Ausführungen bekannt, so ist es bekannt, derartige Regale etwa als Durchlauflager zu gestalten, in der Weise, daß die zu lagernden Güter auf einer Seite in die jeweiligen Positionen im Regal eingeschoben und von einer anderen Seite her entnommen werden. In derartigen Regalen sind die Lagerpaletten regelmäßig auf Rollrahmen abgesetzt, die die einfache Bewegung der Paletten im Lagersystem ermöglichen. Diese Rollrahmen laufen auf entsprechenden Schienen und sind von Regalbedienungsgeräten manipulierbar.

Es gibt Einsatzfälle, in denen das Vorsehen besonderer Rollpaletten einen vergleichsweise hohen Aufwand darstellt, so daß es wünschenswert ist, eine andere Bewegungsart der Paletten zu ermöglichen.

Aufgabe der Erfindung ist daher die Schaffung einer Lösung, mit der auf den Einsatz derartiger Rollpaletten bzw. Rollrahmen zur Aufnahme von Paletten verzichtet werden kann.

Bei einer Palette der eingangs bezeichneten Art wird diese Aufgabe gemäß der Erfindung dadurch gelöst, daß die Unterseite der Palette mit wenigstens einem Schienenpaar zur Verschiebung auf korrespondierenden, ortsfesten Rollenbahnen im Lager bzw. Regal ausgerüstet ist.

Mit dieser Gestaltung ist eine gezielte definierte Beförderung derartiger Paletten auf Rollbahnen möglich. Bekannte Rollbahnen bestehen aus einer Vielzahl von nebeneinander angeordneten Rollen, die flächige Bereiche von Paletten oder sonstigen Transporteinrichtungen beaufschlagen, wobei zusätzlich eine Führung vorgesehen sein muß. Dies ist nach der Erfindung nicht mehr notwendig, da die Schienenpaare weitestgehend für eine definierte Rollbewegung der entsprechend ausgerüsteten Palette sorgen können.

Die Erfindung sieht auch vor, daß die Unterseite der Palette in beiden Hauptrichtungen mit je einem sich mit dem anderen kreuzenden Schienenpaar ausgerüstet ist. Damit ist es möglich, die Palette nicht nur in der durch das eine Schienenpaar vorgegebenen Richtung definiert zu bewegen, sondern auch in der dazu in der Ebene senkrecht angeordneten Richtung.

Zweckmäßig ist es, die Schienen auf den Paletten aus Metallprofilen auszubilden, wobei in weiterer Ausgestaltung vorgesehen sein kann, daß die Schienen mit in der Rollage die Laufrollen geringfügig außen übergreifenden Randprofilbereichen ausgerüstet sind.

Gerade die letztere Ausgestaltung macht eine geführte Bewegung der Palette möglich, d.h. sie läßt auch in einem gewissen Rahmen Kurvenführungen derartig ausgerüsteter Paletten zu.

Die Erfindung umfaßt auch die Möglichkeit, an der Unterseite der Paletten die Schienen an besonderen Bauteilen vorzusehen, so sieht die Erfindung in Ausgestaltung vor, daß die mit den Schienen versehene Unterseite der Palette von einem Aufsatzrahmen gebildet ist. Auf diesen Rahmen werden dann die entsprechenden Paletten abgesetzt, ohne daß die Schienen körperlich mit den Paletten direkt verbunden wären. Bei sogenannten Gitterboxpaletten können die Schienen auch an diesen Gitterboxpaletten befestigt, z.B. verschweißt sein.

Ein besonderer Vorteil der Erfindung besteht darin, daß nicht nur wie üblich vier Räder die Last der Palette aufnehmen, sondern es ist möglich, eine Vielzahl von sehr dicht gelagerten Rollen zur Lastaufnahme und zur Förderung der Paletten im Regallager vorzusehen.

Die Erfindung ist nachstehend anhand der Zeichnung beispielsweise näher erläutert. Diese zeigt in

Fig. 1 in räumlicher Darstellung eine Palette nach der Erfindung auf einer Rollenbahn sowie in

Fig. 2 eine Seitenansicht einer Rollpalette mit Rollenbahn.

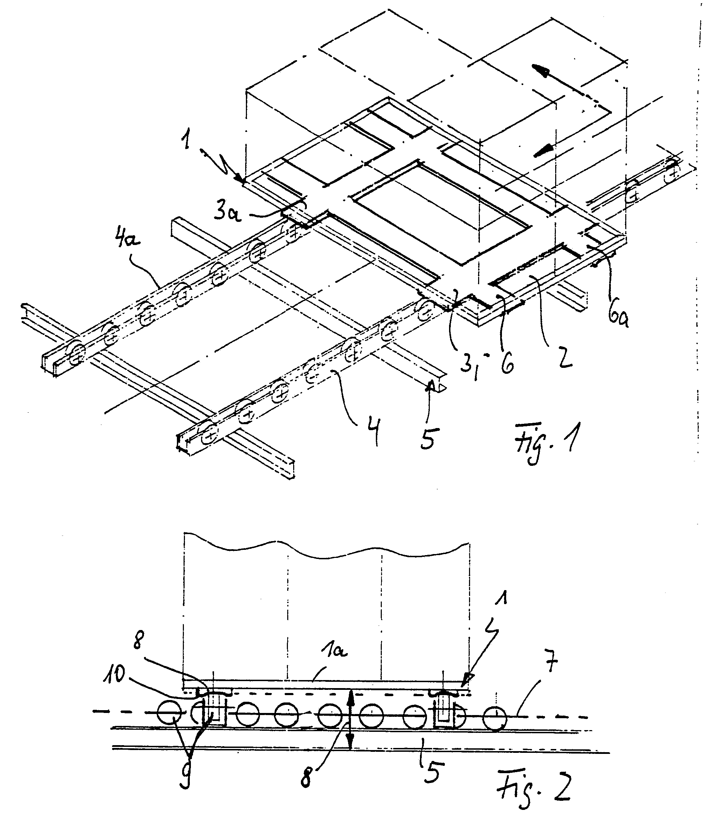

Die allgemein mit 1 bezeichnete Palette kann z.B. aus einer Tragfläche 2 gebildet sein, die an ihrer Unterseite mit wenigstens einem Schienenpaar 3, 3a ausgerüstet ist, die mit Rollenbahnen 4 bzw. 4a eines ansonsten nicht näher dargestellten Rollagers zusammmenwirken. Die Tragfläche kann auch von einem mit den Schienen versehenen Aufsatzrahmen 1a gebildet sein (Fig. 2).

Die Rollenbahnen 4 und 4a sind auf einer allgemein mit 5 bezeichneten Tragkonstruktion befestigt.

Im dargestellten Beispiel trägt die Palette 1 nicht nur zwei parallele Schienen 3 und 3a, sondern dazu senkrecht angeordnete weitere Schienen 6 und 6a, die mit in Fig. 2 mit 7 bezeichneten Rollenbahnen zusammenwirken, die senkrecht zu den Rollenbahnen 4 und 4a angeordnet sind.

Um ein Abrollen der Palette 1 bzw. ein Umsetzen dieser Palette von Rollenbahnen 4 und 4a auf die Rollenbahnen 7 zu ermöglichen, können die Rollenbahnen 7 anhebbar gestaltet sein, was in Fig. 2 mit dem Doppelpfeil 8 angedeutet sein soll.

Die Schienen 4 bzw. 4a und auch die Schienen 6 und 6a auf der Unterseite der Palette 1 können in der in Fig. 2 dargestellten Weise aus Profilen gebildet sein mit einem mittleren Laufbereich 8 und äußeren, die allgemein mit 9 bezeichneten Rollen leicht übergreifenden Randbereichen 10.

Natürlich ist das beschriebene Ausführungsbeispiel der Erfindung noch in vielfacher Hinsicht abzuändern, ohne den Grundgedanken zu verlassen. So können die Schienen auch in anderer Weise profiliert sein, je nach zu tragenden Elementen können statt zweier Schienen auch eine Mehrzahl paralleler Schienen vorgesehen sein oder reine Tragschienen und davon unabhängige, als gesonderte Bauteile ausgebildete Führungs- und Leitschienen und dgl. mehr.

**Ansprüche**

1. Palette zur Aufnahme von Gütern und zum Einsatz in Rollregallagern oder dgl.,
dadurch gekennzeichnet,
daß die Unterseite der Palette (1) mit wenigstens einem Schienenpaar (3,3a) zur Verschiebung auf korrespondierenden, ortsfesten Rollenbahnen (4,4a) im Lager bzw. Regal ausgerüstet ist.

2. Palette nach Anspruch 1,
dadurch gekennzeichnet,
daß die Unterseite der Palette (1) in beiden Hauptrichtungen mit je einem sich kreuzenden Schienenpaar (3,3a; 6,6a) ausgerüstet ist.

3. Palette nach Anspruch 1 oder 2,
dadurch gekennzeichnet,
daß die Schienen (3,6) aus Metallprofilen gebildet sind.

4. Palette nach Anspruch 3,
dadurch gekennzeichnet,
daß die Schienen (3,6) mit in der Rollage die Laufrollen (9) geringfügig außen übergreifenden Randprofilbereichen (10) ausgerüstet sind.

5. Palette nach einem der vorangehenden Ansprüche,
dadurch gekennzeichnet,
daß die mit den Schienen (3,6) versehene Unterseite der Palette (1) von einen Aufsatzrahmen (1a) gebildet ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 768 416 (JUECHTER)<br>* Spalte 2, Zeile 53 - Spalte 4, Zeile 63; Figuren 1-6 *<br>--- | 1,3,4,5 | B 65 D 19/38<br>B 65 G 1/08 |
| X | US-A-3 760 741 (BELCHER)<br>* Zusammenfassung *<br>--- | 1,3,4,5 | |
| A | GB-A-2 047 651 (KOSAN CRISPLANT A/S)<br>* Seite 2, Zeilen 31-48; Figur 4 *<br>--- | 1 | |
| A | GB-A-1 547 671 (HAMMOND)<br>* Seite 4, Zeilen 11-18; Figur 4 *<br>--- | 1 | |
| A | US-A-3 273 727 (ROGERS)<br>* Spalte 2, Zeilen 25-29; Figur 6 *<br>----- | 1,2 | |

**RECHERCHIERTE SACHGEBIETE (Int. Cl.5)**

B 65 D
B 65 G

Der vorliegende Recherchenbericht wurde für alle Patentansprüche erstellt

| Recherchenort | Abschlußdatum der Recherche | Prüfer |
|---|---|---|
| DEN HAAG | 09-01-1990 | BEERNAERT J.E. |